# EUROPEAN PATENT SPECIFICATION

(11) **EP 1 030 147 B1**
(45) Date of publication and mention of the grant of the patent: **07.04.2004**
(21) Application number: 99102743.4
(22) Date of filing: 19.02.1999
(51) Int. Cl.: F25D 29/00, G05D 23/19

(54) **Controller and method for controlling the temperature in a refrigerator**
Regler und Verfahren zur Regelung der Temperatur in einem Kühlschrank
Dispositif et procédé de commande de la température dans un réfrigérateur

(43) Date of publication of application: 23.08.2000
(73) Proprietor: Ranco Incorporated of Delaware, Wilmington, Delaware 19801-1612 (US)
(72) Inventor: Bailey, Graham, 67366 Weingarten (DE); Heger, Helmut, 68789 St. Leon-Rot (DE); Hirsch, Mike, 68809 Neulussheim (DE)
(74) Representative: HOFFMANN - EITLE

(56) References cited:
- EP-A- 0 099 417
- EP-A- 0 686 818
- GB-A- 2 254 452
- US-A- 4 410 132
- US-A- 5 115 968
- US-A- 5 524 444
- US-A- 5 524 447
- PATENT ABSTRACTS OF JAPAN vol. 018, no. 341 (M-1629), 28 June 1994 (1994-06-28) -& JP 06 082141 A (MATSUSHITA REFRIG CO LTD), 22 March 1994 (1994-03-22)

## Description

The present invention relates to a controller and a method for controlling the temperature in a food compartment of a refrigerator, according to the preamble of claims 1 and 8, respectively. A controller and a method of this kind are known from EP 0 686 818.

From this document a controller for controlling the temperature in a compartment of a refrigerator is known, which addresses the wellknown problem that in conventional refrigerator appliances the air temperature within the food compartment shows a strong dependency on the ambient temperature of the refrigerator appliance. Reason for this phenomenon is, that the actual air temperatur resulting from the two point control of the evaporator temperatur in the food compartment does not only depend on evaporator temperatur thresholds Tₒₙ and T_{off} between which the evaporator temperatur changes periodically, but furthermore depends on the running time tₒₙ of the compressor and the pause time t_{off} of the compressor. For a high ambient temperature, the running time tₒₙ of the compressor will be larger than for low ambient temperatures. The pause time t_{off} will be higher for low ambient temperatures than for high ambient temperatures. Consequently, for high ambient temperatures the air temperature inside the food compartment tends to be lower than if the ambient temperature is low.

In order to solve this problem, EP 0 686 818 suggests to measure a rate of rise in evaporator temperature when the compressor is switched off. This rate of rise in evaporator temperatur is dependent on the dispersion through the appliance insulation. The dispersion in turn depends on the temperature difference between the air temperature inside the food compartment and the ambient temperature of the refrigerator. In EP 0 686 818 the rate of rise in evaporator temperature when the compressor is switched off, is taken to adjust the lower temperature threshold T_{off} in order to compensate the influence of the ambient temperature on the air temperature in the food compartment.

The rate of rise in evaporator temperature is, however, not only dependent on the temperature dispersion through the appliance insulation. This rate of rise of evaporator temperature can be influenced by other factors, particularly the amount of food stored in the food compartment. If the food compartment is fully loaded, the rate of rise in evaporator temperature will be lower than when the food compartment is empty, given the same thermal dispersion, that is, given the same temperature difference between the air in the food compartment and the ambient temperature. For this reason the known solution of compensating the influence of different ambient temperatures is not always accurate.

Accordingly, it is the object of the present invention to provide a controller and a method for controlling the temperature inside a food compartment of a refrigerator which allows to compensate the influence of different ambient temperatures on the air temperature inside the food compartment with increased accuracy.

According to the present invention, this object is solved as defined in claims 1 and 8.

According to the present invention, the ambient temperature is estimated on the basis of a ratio of the rate of rise of evaporator temperature when the compressor is off to the rate of fall of evaporator temperature when the compressor is on.

The present invention is based on the recognition that factors like food load influence the rate of rise of evaporator temperature when the compressor is off in the same way as they influence the rate of fall of evaporator temperature when the compressor is on. Accordingly, an entity which reflects the ratio of the rate of rise of evaporator temperature when the compressor is off to the rate of fall of evaporator temperature when the compressor is on, can be taken as a basis for estimating the thermal dispersion of the food compartment with a reduced influence of factors like to food load.

The thermal dispersion ratio of the rate of rise of evaporator temperature when the compressor is off to rate of fall of evaporator temperature when the compressor is on, can be evaluated in a number of different ways. These rates of rise and fall can be measured either over a constant time period or over a constant temperature change. If these rates of rise and fall are measured over a constant time period, the beginning of the time interval used for measuring a temperature change can be synchronized with that time instant when the compressor is switched off, to measure the rate of rise of evaporator temperature when the compressor is off, and can be synchronized with that time instant when the compressor is switched on, to measure the rate of fall of evaporator temperature when the compressor is on.

If these rates of rise and fall are measured over a constant temperature change, it is advantageous to use the difference between a low temperature threshold, also called cut-out temperature, and a high temperature threshold, also called cut-in temperature, as the temperature change. The high temperature threshold defines a temperature value, which when exceeded by the evaporator temperature, results in that the compressor is switched on. Similarly, if the evaporator temperature falls below the low temperature threshold, the compressor is switched off. Since in this case the temperature change for measuring the rate of rise of evaporator temperature is the same as the temperature change for measuring the rate of fall of evaporator temperature, said ratio of the rate of rise of evaporator temperature when the compressor is off to the rate of fall of evaporator temperature when the compressor is on, can be evaluated from a ratio tₒₙ/t_{off} of the compressor on-time period tₒₙ to the compressor off-time period t_{off}. This evaluation of the thermal dispension ratio is to a large extent independent from factors such as food load. It provides an indication of the thermal dispersion of the food compartment which in turn indicates the ambient temperature of the refrigerator.

An entity equivalent to the ratio tₒₙ/t_{off} is the compressor duty cycle c = tₒₙ/(tₒₙ + t_{off}). Since the compressor duty cycle c can be expressed as a function of tₒₙ/t_{off} alone, also the compressor duty cycle c provides an evaluation of the thermal dispersion ratio indicating the ambient temperature substantially without the influence of the actual food load in the refrigerator compartment.

The thermal dispersion ratio is preferably calculated by the refrigerator control on a continuous basis. That is, preferably each time the compressor changes its operating state from off to on or from on to off, the rate of change of evaporator temperature is evaluated such that each time the operating state of the compressor has changed, an updated thermal dispersion ratio can be evaluated.

According to the present invention, the low temperature threshold and/or the high temperature threshold are adjusted in accordance with the evaluation of the thermal dispersion ratio such that the influence of the ambient temperature on the actual average air temperature within the food compartment can be compensated. This compensation can be achieved by means of only adjusting the low temperature theshold based on the thermal dispersion ratio, or by means of only adjusting the high temperature threshold based on the thermal dispersion ratio, or by means of adjusting both the low temperature threshold and the high temperature threshold on the basis of the thermal dispersion ratio.

The thermal dispersion ratio can be disturbed by factors such as frequent or long refrigerator door openings or the introduction of extremely warm or cold goods. If it is desired to also reduce the influence of these factors, it is advantageous to look for a stabilization of the thermal dispersion ratio before an adjustment of said at least one of the high and low temperature thresholds is made. Whether or not the thermal dispersion ratio has stabilized, can for instance be judged from a number of consecutive evaluations of this ratio and analyzing whether this predetermined number of consecutive evaluations differ from each other by less than a predetermined amount. If a predetermined number of consecutive evaluations of the thermal dispersion ratio does not differ by more than this predetermined amount, said adjustment of thresholds based on the thermal dispersion ratio is enabled, otherwise disabled. A controller implementing this method is advantageous in that it does not require an additional sensor for sensing the door position and needs no more than an input from the existing evaporator temperature sensor and an input from a user adjustable temperature dial for setting a target value of the air temperature within the food compartment.

Preferably, the controller includes a lookup table which contains various thermal dispersion ratios and associated cut-in temperatures and cut-out temperatures for the compressor which have been chosen empirically during development testing of the refrigerator appliance, to suit the particular ambient conditions detected. It is convenient if these ambient temperatures are organized into temperature bands internationally recognized for refrigeration appliances.

A controller according to the present invention is preferably implemented using an appropriately programmed microcontroller.

In the following, preferred ambodiments of the present invention will be described with reference to the accompanying drawings. Identical or corresponding elements in the various drawings have been denoted with identical reference numerals.
- Fig. 1: shows a time chart schematically depicting the behaviour of the air temperature in the food compartment, the evaporator temperature and the compressor operating states over time;
- Fig. 2: shows a first embodiment of a controller for controlling a refrigerator according to the present invention;
- Fig. 3: shows a second embodiment of a controller according to the present invention; and
- Fig. 4: shows a third embodiment of a controller according to the present invention.

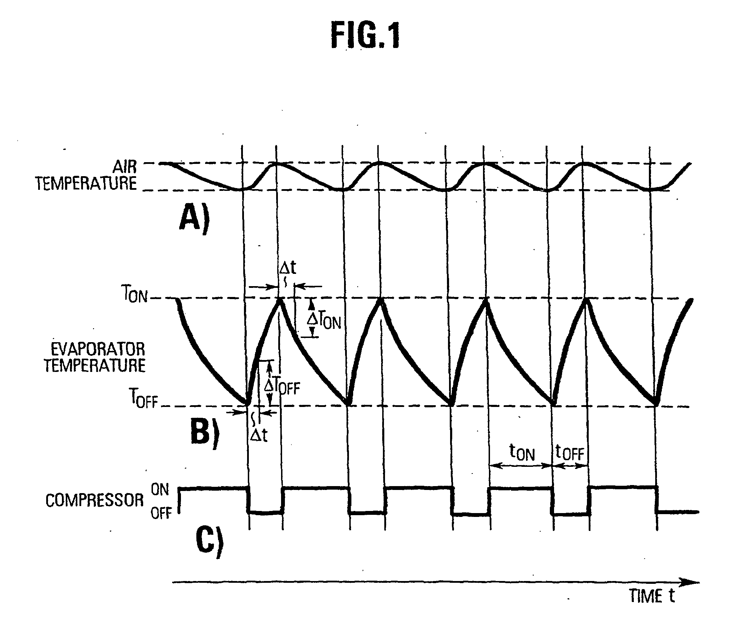

Fig. 1 is a time chart with three curves A, B and C. All three curves use the same time axis t. Curve A shows the behaviour of the air temperature within a food compartment of a refrigerator over time. Curve B shows the behaviour of the temperature of the evaporator in the food compartment over time. Finally, curve C shows the operating states ON and OFF of the compressor in association with the temperature curves A and B.

From Fig. 1 it can be taken that in the course of controlling the average air temperature corresponding to the temperature of the food in the refrigerator compartment, the compressor which circulates cooling fluid through the refrigeration circuit of the refrigerator, switches on when the evaporator temperature has risen to a high temperature value Tₒₙ, called the cut-in temperature. The operation of the compressor results in that the evaporator temperature falls until a low temperature threshold T_{off} is reached which causes the compressor to switch off again. In the off state of the compresssor, the evaporator temperature rises again until the high temperature threshold Tₒₙ has been reached. This cycle repeats periodically.

While the temperature difference Tₒₙ - T_{off} between the high temperature threshold and the low temperature threshold can be substantial, e.g. about 20°C, the resulting cyclic change of the air temperature in the food compartment is much lower, as indicated in curve A of Fig. 1. The average air temperature depends on the high temperature threshold Tₒₙ and on the low temperature threshold T_{off} and furthermore on the duration of each of the operating states of the compressor in each cycle. The present invention is based on the recognition that when the ambient temperature increases, the rate of fall of evaporator temperature when the compressor is on, decreases due to the thermal dispersion of the refrigerator insulation and other reasons. Moreover, the rate of rise of evaporator temperature when the compressor is off, will increase with an increase in the ambient temperature. On the other hand, an increased food load in the compartment will not only slow down the rate of fall of evaporator temperature when the compressor is on but also the rate of rise of evaporator temperature when the compressor is off. Accordingly, a ratio of the rate of rise of evaporator temperature when the compressor is off to the rate of fall'of evaporator temperature when the compressor is on, will be a sensitive indication of ambient temperature and will at the same time be insensitive against food load variations.

Fig. 1 indicates one possibility how this thermal dispersion ratio can be evaluated. According to Fig. 1, a temperature difference ΔT_{off} is measured over a predetermined time interval Δt which begins whenever the compressor changes its operating state from on to off. The ratio ΔT_{off}/Δt is an evaluation of the rate of rise of evaporator temperature when the compressor is off. Similarly, a temperature difference ΔTₒₙ is measured over a predetermined time interval Δt which can be of the same length as that used for measuring ΔT_{off}, the interval Δt for measuring ΔTₒₙ beginning when the compressor changes its operating state from off to on. The ratio ΔTₒₙ/Δt is an evaluation of the rate of fall of evaporator temperature when the compressor is off. The ratio of this rate of rise to this rate of fall represents the thermal dispersion ratio indicating the ambient temperature with low sensitivity towards food load variations.

For evaluating this thermal dispersion, the time interval Δt can be kept constant when measuring the change of temperature ΔT_{off} and ΔTₒₙ, or the change of temperature is kept constant and the time interval Δt is measured. According to an advantageous embodiment of the invention, ΔTₒₙ and ΔT_{off} are chosen such that ΔTₒₙ = ΔT_{off} = Tₒₙ- T_{off} = ΔT. From (ΔT/t_{off})/ΔT/tₒₙ) = tₒₙ/t_{off} it is evident that this ratio of the compressor on time to the compressor off time indicates an essentially food load independent thermal dispersion ratio of the refrigerator which is useful for estimating the ambient temperature of the refrigerator.

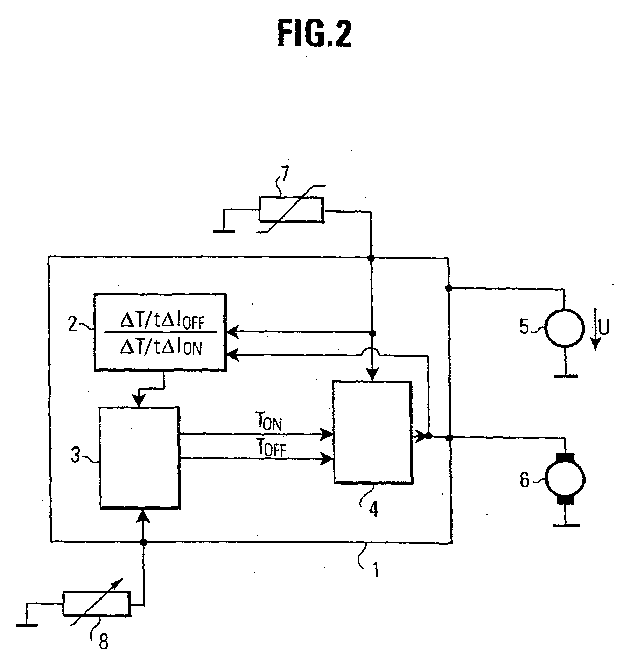

Fig. 2 shows a first embodiment of a controller according to the present invention. In this figure, reference numeral 1 denotes the controller which can be implemented by means of software in a microcontroller. Reference numeral 7 denotes a temperature sensor, for instance a temperature dependent resistor. This temperature sensor is mounted in thermal contact with the evaporator in the food compartment and provides a temperature input to the controller 1. Reference numeral 8 denotes a temperature setting means which is user-adjustable, for presetting a target temperature inside the food compartment. The user-adjustable temperature setting means 8 can be a potentiometer which provides a target temperature input to controller 1. Reference numeral 5 denotes a power supply for the controller 1. Reference numeral 6 represents the compressor which is switched on and off by the controller 1.

Reference numberal 4 denotes a comparator with hysteresis which compares the temperature sensed by the temperature sensor 7 with a high temperature threshold Tₒₙ and with a low temperature threshold T_{off}. As depicted in Fig. 7, the comparator 4 switches on the compressor as soon as the detected evaporator temperature has exceeded Tₒₙ, and switches off the compressor as soon as the detected evaporator temperature falls below T_{off}. Reference numeral 2 denotes a section for evaluating a thermal dispersion ratio based on a ratio of said rate of fall of evaporator temperature when said compressor is off to a rate of rise of temperature when said compressor is on. In order to evaluate this thermal dispersion ratio, section 2 receives the detected evaporator temperature and the operating state of the compressor 6 as inputs. For each of the operating states ON and OFF of the compressor, section 2 evaluates a rate of fall of evaporator temperature and a rate of rise of evaporator temperature, respectively, and evaluates a ratio of these rates each time the compressor 6 has changed its operating state. This ratio generated by section 2 which represents the thermal dispersion ratio of the refrigerator, is received by section 3. This section comprises a database which contains high temperature threshold values and low temperature threshold values for a variety of different values of the thermal dispersion ratio provided by section 2, and for a variety of different target temperature values set by a user.

In this embodiment, section 3 furthermore contains memory locations for storing a predetermined number of most recent thermal dispersion ratios. Each time when section 2 outputs a new thermal dispersion ratio, the oldest of the stored previous thermal dispersion ratios is discarded and replaced by the newest. Section 3 furthermore contains means for judging whether the stored thermal dispersion ratios differ from each other by more than a predetermined amount. If this is the case, section 3 detects an unstable condition, e.g. resulting from frequent or long door openings or the introduction of extremely warm or cold goods. As long as the unstable condition prevails, section 3 will not update the high temperature threshold Tₒₙ and the low temperature threshold T_{off} output to comparator 4. As soon as the stored thermal dispersion ratios are found by section 3 to differ from each other by less than said predetermined amount, section 3 detects a stable condition. As long as the stable condition prevails, section 3 takes the most recent thermal dispersion ratio provided by section 2, furthermore takes the user-adjusted target temperature provided by setting means 8, reads from its database a low temperature threshold T_{off} and a high temperature threshold Tₒₙ and outputs these thresholds to comparator 4. The database of section 3 can be a table filled with threshold values which have been chosen empirically during development testing under different ambient temperature conditions.

While in the embodiment of Fig. 2, section 3 provides both the low temperature threshold and the high temperature threshold to comparator 4 depending on the set target temperature and the evaluated thermal dispersion ratio, the same effect of compensating the influence of ambient temperature variations on the average air temperature in the food compartment can be obtained if only one of these temperature thresholds, preferably the low temperature threshold, is adjusted by section 3 while the other temperature threshold is kept fixed.

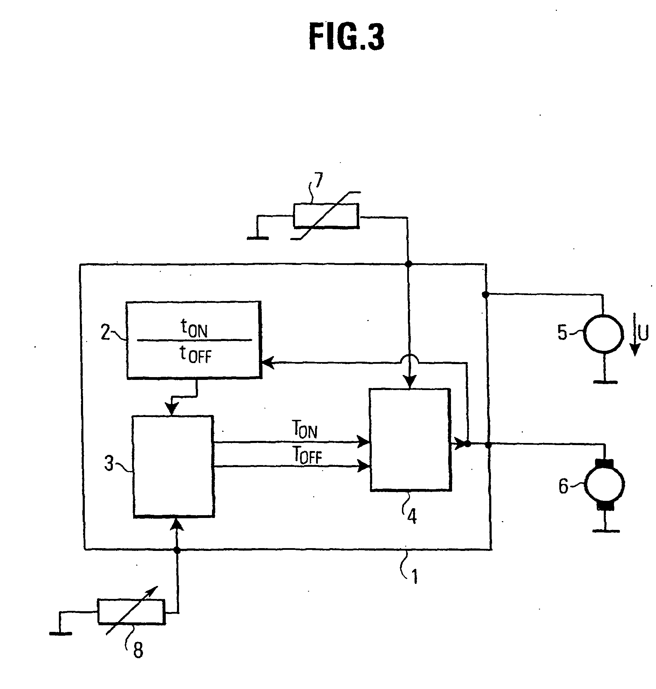

Fig. 3 shows a second embodiment of the present invention. This embodiment differs from the embodiment of Fig. 2 in section 2 for evaluating a thermal dispersion ratio. All other elements of Fig. 3 are not different from the corresponding elements of Fig. 2, such that their description need not be repeated.

According to the embodiment of Fig. 3, the section 2 for evaluating a thermal dispersion ratio based on a ratio of said rate of fall of evaporator temperature when said compressor is off to a rate of rise of temperature when said compressor is on, is constituted to measure the on time tₒₙ of the compressor and the off time t_{off} of the compressor. To this end, section 2 receives information on the current operating status of the compressor 6 from comparator 4. Each time the compressor 6 has changed its operating state, section 2 calculates a ratio tₒₙ/t_{off} for evaluating the thermal dispersion ratio of the refrigerator, and outputs this ratio to section 3. According to this embodiment, section 2 does not require an input from temperature sensor 7 on the evaporator because in this embodiment the evaluation of the thermal dispersion ratio is based on rates of fall and rise of evaporator temperature which in turn are based on the same temperature difference ΔT = Tₒₙ - T_{off}. During normal operation of the refrigerator, this temperature difference remains constant such that the ratio tₒₙ/t_{off} is a reliable evaluation of the thermal dispersion ratio input into section 3.

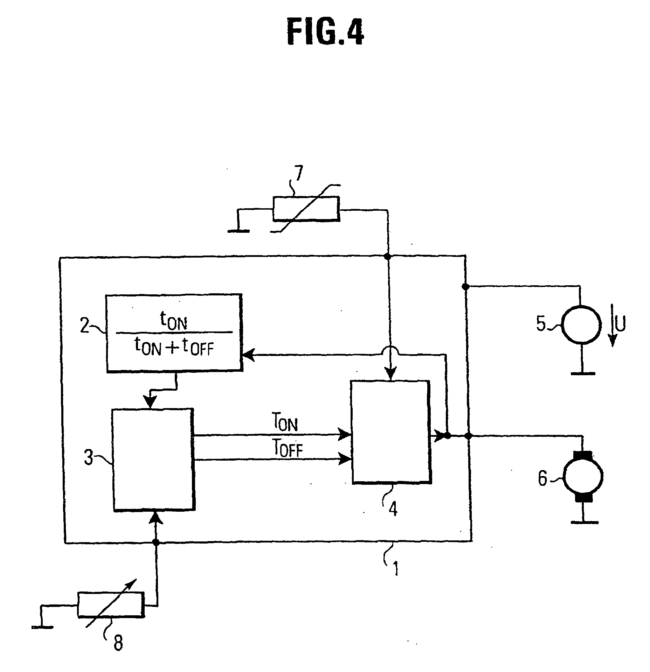

Fig. 4 shows a third embodiment of a controller according to the present invention. This embodiment differs from the embodiment of Fig. 3 only in section 2. All remaining elements are not different from the corresponding elements in Figs. 2 and 3 such that their description need not be repeated.

According to this embodiment, section 2 evaluates a thermal dispersion ratio of the refrigerator based on the duty cycle of the compressor 6. To this end, section 2 receives an indication on the current operating state of compressor 6 from comparator 4. Section 2 measures the on time period tₒₙ of the compressor and the off time period toff of the compressor. Each time the operating state of the compressor has changed, section 2 calculates a new duty cycle from the most recently completed on period and the most recently completed off period of the compressor. The duty cycles calculated by section 2 are input into section 3 as an evaluation of the thermal dispersion ratio of the refrigerator.

A controller according to the present invention is suitable for controlling the temperature in the freshfood compartment, also called fridge compartment of a refrigerator. It is similarly suitable for controlling the temperature in a freezer compartment for storing frozen food, of a refrigerator. A controller is particularly suitable for controlling the temperature in a refrigerator combining a freezer compartment and a fridge compartment. If such a refrigerator has a high compressor and a single refrigeration circuit with a series connection of the evaporator in the fridge compartment and the evaporator in the freezer compartment, and a temperature sensor only on the evaporator of the fridge compartment, the controller is able to maintain the temperature in the freezer compartment essentially stable in different ambient temperature conditions.

The term freezer compartment refers to compartments having at least a one star rating.

A controller according to the present invention can compensate the influence of ambient temperatures on the temperature inside the food compartment of a refrigerator essentially independent from the food load and does not require a separate ambient temperature sensor.

## Claims

1. A controller for controlling the temperature in a food compartment of a refrigerator having an evaporator located in said food compartment and a compressor (6) for circulating cooling fluid through said evaporator, said controller (1) comprising:
- means (8) receiving a target temperature value from a target temperature setting means for said food compartment;
- means (7) receiving an actual temperature value of said evaporator in a refrigeration compartment of the refrigerator;
- means (4) switching on said compressor (6) when the actual temperature exceeds a high temperature threshold (Tₒₙ) and for switching off said compressor (6) when said actual temperature falls below a low temperature threshold (T_{off}), said temperature thresholds being determined depending on said food compartment target temperature;
- means (3) compensating a dependency of an average temperature in said food compartment from an ambient temperature of the refrigerator by adjusting said low temperature threshold (T_{off}) and/or said high temperature threshold (Tₒₙ), said compensation means (3) being adapted to measure a rate of rise of evaporator temperature when said compressor is off;
**characterized in that**
- said compensation means (3) is adapted to evaluate a thermal dispersion ratio based on a ratio of said rate of rise of evaporator temperature when said compressor (6) is off, to a rate of fall of temperature when said compressor (6) is on, and to adjust said low temperature threshold (T_{off}) and/or said high temperature threshold (Tₒₙ) in accordance with said thermal dispersion ratio.

2. The controller according to claim 1,
**characterized in that**
- said compensation means (3) is adapted to determine said rate of fall and/or said rate of rise of evaporator temperature by measuring a change of evaporator temperature over a specified period of time (Δt) or by measuring a period of time during which the evaporator temperature changes by a specified amount (ΔT).

3. The controller according to claim 1,
**characterized in that**
- said compensation means (3) is adapted to measure a period tₒₙ when said compressor (6) is on and a period t_{off} when said compressor is off, and to obtain said thermal dispersion ratio from a ratio tₒₙ/t_{off} of said ON time period to said OFF time period.

4. The controller according to claim 1,
**characterized in that**
- said compensation means (3) is adapted to measure a period tₒₙ when said compressor (6) is on and a period t_{off} when said compressor (6) is off, and to obtain said thermal dispersion ratio from a ratio of said Off time period t_{off} to a sum tₒₙ+t_{off} of said ON time period and said OFF time period.

5. The controller according to any one of the preceding claims,
**characterized by**
- look up table means (3) for storing low temperature threshold values and/or high temperature threshold values in association with various values of said thermal dispersion ratio and with food compartment target temperature values;
- said compensation means (3) being adapted to read said low temperature threshold and/or said high temperature threshold from a location in said lookup table indicated by said evaluated thermal dispersion ratio and said food compartment target temperature.

6. The controller according to any of the preceding claims,
**characterized in that**
- said compensation means (3) is adapted to store a predetermined number of consecutively evaluated thermal dispersion ratios; and
- to inhibit an adjustment of said low temperature threshold (T_{off}) and/or said high temperature threshold (Tₒₙ) if said predetermined number of thermal dispersion ratios differ from each other by more than a predetermined variance threshold.

7. The controller according to any of the preceding claims,
**characterized in that**
- at least said compensation means (3) is implemented in a microcontroller.

8. A method of controlling the temperature in a food compartment of a refrigerator having an evaporator located in said food compartment and a compressor (6) for circulating cooling fluid through said evaporator, comprising the steps of
- receiving a target temperature value for said food compartment;
- receiving an actual temperature value of said evaporator in said food compartment of the refrigerator;
- switching on said compressor (6) when the actual temperature exceeds a high temperature threshold (Tₒₙ) and switching off said compressor (6) when said actual temperature falls below a low temperature threshold (T_{off}); at least one of said temperature thresholds being generated depending on said food compartment target temperature;
- measuring a rate of rise of evaporator temperature when said compressor (6) is off and compensating a dependency of the average temperature in said food compartment from an ambient temperature by adjusting said low temperature threshold and/or said high temperature threshold;
**characterized by**
- evaluating a thermal dispersion ratio based on a ratio of said rate of rise of evaporator temperature when said compressor (6) is off, to a rate of fall of temperature when said compressor (6) is on, and adjusting said low temperature threshold (T_{off}) and/or said high temperature threshold (Tₒₙ) in accordance with said thermal dispersion ratio.

## Patentansprüche

1. Steuereinrichtung zum Steuern der Temperatur in einem Nahrungsmittelraum eines Kühlschranks, der einen in dem Nahrungsmittelraum angeordneten Verdampfer und einen Kompressor (6) zum Zirkulieren von Kühlfluid durch den Verdampfer aufweist, wobei die Steuereinrichtung (1) umfasst:
- eine Einrichtung (8), die einen Zieltemperaturwert von einer Zieltemperatur-Einstelleinrichtung für den Nahrungsmittelraum empfängt;
- eine Einrichtung (7), die einen tatsächlichen Temperaturwert des Verdampfers in einem Kühlraum des Kühlschranks empfängt;
- eine Einrichtung (4), die den Kompressor (6) einschaltet, wenn die tatsächliche Temperatur eine hohe Temperaturschwelle (Tₒₙ) übersteigt, und den Kompressor (6) ausschaltet, wenn die tatsächliche Temperatur unter eine untere Temperaturschwelle (T_{off}) fällt, wobei die Temperaturschwellen in Abhängigkeit von der Nahrungsmittelraum-Zieltemperatur bestimmt werden;
- eine Einrichtung (3), die eine Abhängigkeit einer Durchschnittstemperatur in dem Nahrungsmittelraum von einer Umgebungstemperatur des Kühlschranks kompensiert, indem die untere Temperaturschwelle (T_{off}) und/oder die hohe Temperaturschwelle (Tₒₙ) eingestellt wird, wobei die Kompensationseinrichtung (3) dafür ausgelegt ist, um eine Rate eines Anstiegs einer Verdampfertemperatur zu messen, wenn der Kompressor aus ist;
**dadurch gekennzeichnet, dass**
- die Kompensationseinrichtung (3) ausgelegt ist, um ein thermisches Dispersionsverhältnis auf Grundlage eines Verhältnisses der Rate eines Anstiegs der Verdampfertemperatur, wenn der Kompressor (6) aus ist, zu eine Rate eines Abfalls der Temperatur, wenn der Kompressor (6) ein ist, auszuwerten und die untere Temperaturschwelle (T_{off}) und/oder die hohe Temperaturschwelle (Tₒₙ) in Übereinstimmung mit dem thermischen Dispersionsverhältnis einzustellen.

2. Steuereinrichtung nach Anspruch 1,
**dadurch gekennzeichnet, dass**
- die Kompensationseinrichtung (3) ausgelegt ist, um die Rate eines Abfalls und/oder die Rate eines Anstiegs der Verdampfertemperatur durch Messen einer Änderung einer Verdampfertemperatur über einer spezifischen Zeitperiode (Δt) oder durch Messen einer Zeitperiode, in der sich die Verdampfertemperatur um einen spezifischen Betrag (ΔT) ändert, zu bestimmen.

3. Steuereinrichtung nach Anspruch 1,
**dadurch gekennzeichnet, dass**
- die Kompensationseinrichtung (3) ausgelegt ist, um eine Periode tₒₙ, wenn der Kompressor (6) ein ist, und eine Periode t_{off}, wenn der Kompressor aus ist, zu messen und das thermische Dispersionsverhältnis aus einem Verhältnis tₒₙ/t_{off} der EIN Zeitperiode zu der AUS Zeitperiode zu ermitteln.

4. Steuereinrichtung nach Anspruch 1,
**dadurch gekennzeichnet, dass**
- die Kompensationseinrichtung (3) ausgelegt ist, um eine Periode tₒₙ, wenn der Kompressor (6) ein ist, und eine Periode t_{off}, wenn der Kompressor (6) aus ist, zu messen und das thermische Dispersionsverhältnis aus einem Verhältnis der AUS Zeitperiode t_{off} zu einer Summe tₒₙ+t_{off} der EIN Zeitperiode und der AUS Zeitperiode zu ermitteln.

5. Steuereinrichtung nach irgendeinem der vorangehenden Ansprüche,
**gekennzeichnet durch**
- eine Nachschlagtabellen-Einrichtung (3) zum Speichern von unteren Temperaturschwellwerten und/oder hohen Temperaturschwellwerten in Zuordnung zu verschiedenen Werten des thermischen Dispersionsverhältnisses und zu Nahrungsmittelraum-Zieltemperaturwerten; und
- wobei die Kompensationseinrichtung (3) ausgelegt ist, um die untere Temperaturschwelle und/oder die hohe Temperaturschwelle aus einem Ort in der Nachschlagtabelle zu lesen, der von dem ausgewerteten thermischen Dispersionsverhältnis und der Nahrungsmittelraum-Zieltemperatur angezeigt wird.

6. Steuereinrichtung nach irgendeinem der vorangehenden Ansprüche,
**dadurch gekennzeichnet, dass**
- die Kompensationseinrichtung (3) ausgelegt ist, um eine vorgegebene Anzahl von nacheinander ausgewerteten thermischen Dispersionsverhältnisses zu speichern; und
- eine Einstellung der unteren Temperaturschwelle (T_{off}) und/oder der hohen Temperaturschwelle (Tₒₙ) zu sperren, wenn die vorgegebene Anzahl von thermischen Dispersionsverhältnissen sich voneinander um mehr als eine vorgegebene Varianzschwelle unterscheiden.

7. Steuereinrichtung nach irgendeinem der vorangehenden Ansprüche,
**dadurch gekennzeichnet, dass**
- wenigstens die Kompensationseinrichtung (3) in einem Mikrocontroller implementiert ist.

8. Verfahren zum Steuern der Temperatur in einem Nahrungsmittelraum eines Kühlschranks, der einen in dem Nahrungsmittelraum angeordneten Verdampfer und einen Kompressor (6) zum Zirkulieren von Kühlfluid durch den Verdampfer aufweist, umfassend die folgenden Schritte:
- Empfangen eines Zieltemperaturwerts für den Nahrungsmittelraum;
- Empfangen eines tatsächlichen Temperaturwerts des Verdampfers in dem Nahrungsmittelraum des Kühlschranks;
- Einschalten des Kompressors (6), wenn die tatsächliche Temperatur eine hohe Temperaturschwelle (Tₒₙ) übersteigt, und Ausschalten des Kompressors (6), wenn die tatsächliche Temperatur unter eine untere Temperaturschwelle (T_{off}) fällt, wobei wenigstens eine der Temperaturschwellen in Abhängigkeit von der Nahrungsmittelraum-Zieltemperatur erzeugt wird;
- Messen einer Rate eines Anstiegs einer Verdampfertemperatur, wenn der Kompressor (6) aus ist, und Kompensieren einer Abhängigkeit der Durchschnittstemperatur in dem Nahrungsmittelraum von einer Umgebungstemperatur durch Einstellen der unteren Temperaturschwelle und/oder der hohen Temperaturschwelle;
**gekennzeichnet durch**
- ein Auswerten eines thermischen Dispersionsverhältnisses auf Grundlage eines Verhältnisses der Rate eines Anstiegs der Verdampfertemperatur, wenn der Kompressor (6) aus ist, zu einer Rate eines Abfalls der Temperatur, wenn der Kompressor (6) ein ist, und Einstellen der unteren Temperaturschwelle (T_{off}) und/oder der hohen Temperaturschwelle (Tₒₙ) in Übereinstimmung mit den thermischen Dispersionsverhältnissen.

## Revendications

1. Contrôleur destiné à réguler la température dans un compartiment pour aliments d'un réfrigérateur comportant un évaporateur situé dans ledit compartiment pour aliments et un compresseur (6) destiné à faire circuler du fluide de refroidissement au travers dudit évaporateur, ledit contrôleur (1) comprenant :
- un moyen (8) recevant une valeur de température cible d'un moyen de réglage de température cible pour ledit compartiment pour aliments,
- un moyen (7) recevant une valeur de température réelle dudit évaporateur dans un compartiment de réfrigération du réfrigérateur,
- un moyen (4) activant ledit compresseur (6) lorsque la température réelle dépasse un seuil de température haute (T_{marche}) et arrêtant ledit compresseur (6) lorsque ladite température réelle chute en dessous d'un seuil de température basse (T_{arrêt}), lesdits seuils de température étant déterminés suivant ladite température cible du compartiment pour aliments,
- un moyen (3) compensant une dépendance d'une température moyenne dudit compartiment pour aliments vis-à-vis d'une température ambiante du réfrigérateur en ajustant ledit seuil de température basse (T_{arrêt}) et/ou ledit seuil de température haute (T_{marche}), ledit moyen de compensation (3) étant conçu pour mesurer une vitesse d'augmentation de la température de l'évaporateur lorsque ledit compresseur est arrêté,
**caractérisé en ce que**
- ledit moyen de compensation (3) est conçu pour évaluer un rapport de dispersion thermique sur la base d'un rapport de ladite vitesse de montée de la température de l'évaporateur lorsque ledit compresseur (6) est arrêté, sur une vitesse de chute de la température lorsque ledit compresseur (6) est en marche, et pour ajuster ledit seuil de température basse (T_{arrêt}) et/ou ledit seuil de température haute (T_{marche}) conformément audit rapport de dispersion thermique.

2. Contrôleur selon la revendication 1,
**caractérisé en ce que**
- ledit moyen de compensation (3) est conçu pour déterminer ladite vitesse de chute et/ou ladite vitesse de montée de la température de l'évaporateur en mesurant une variation de la température de l'évaporateur sur un intervalle de temps spécifié (Δt) ou bien en mesurant un intervalle de temps durant lequel la température de l'évaporateur varie d'une valeur spécifiée (ΔT).

3. Contrôleur selon la revendication 1,
**caractérisé en ce que**
- ledit moyen de compensation (3) est conçu pour mesurer une période t_{marche} où ledit compresseur (6) est en marche et une période t_{arrêt} où ledit compresseur est arrêté, et pour obtenir ledit rapport de dispersion thermique d'après un rapport t_{marche}/t_{arrêt} de ladite période de temps de marche sur ladite période de temps d'arrêt.

4. Contrôleur selon la revendication 1,
**caractérisé en ce que**
- ledit moyen de compensation (3) est conçu pour mesurer une période t_{marche} où ledit compresseur (6) est en marche et une période t_{arrêt} où ledit compresseur est à l'arrêt, et pour obtenir ledit rapport de dispersion thermique d'après un rapport de ladite période de temps d'arrêt t_{arrêt} sur une somme t_{marche} + t_{arrêt} de ladite période de temps de marche et de ladite période de temps d'arrêt.

5. Contrôleur selon l'une quelconque des revendications précédentes,
**caractérisé par**
- un moyen de table de consultation (3) destiné à mémoriser des valeurs de seuils de températures basses et/ou des valeurs de seuils de températures hautes en association avec diverses valeurs dudit rapport de dispersion thermique et avec des valeurs de températures cibles du compartiment pour aliments,
- ledit moyen de compensation (3) étant conçu pour lire ledit seuil de température basse et/ou ledit seuil de température haute à partir d'un emplacement dans ladite table de consultation indiqué par ledit rapport de dispersion thermique évalué et ladite température cible de compartiment pour aliments.

6. Contrôleur selon l'une quelconque des revendications précédentes,
**caractérisé en ce que**
- ledit moyen de compensation (3) est conçu pour mémoriser un nombre prédéterminé de rapports de dispersion thermique évalués de façon consécutive, et
- pour inhiber un ajustement dudit seuil de température basse (T_{arrêt}) et/ou dudit seuil de température haute (T_{marche}) si ledit nombre prédéterminé de rapports de dispersion thermique diffèrent les uns des autres de plus d'un seuil de variance prédéterminé.

7. Contrôleur selon l'une quelconque des revendications précédentes,
**caractérisé en ce que**
- au moins ledit moyen de compensation (3) est réalisé dans un microcontrôleur.

8. Procédé de régulation de la température dans un compartiment pour aliments d'un réfrigérateur comportant un évaporateur fixé dans ledit compartiment pour aliments et un compresseur (6) destiné à faire circuler un fluide de refroidissement au travers dudit évaporateur, comprenant les étapes consistant à
- recevoir une valeur de température cible pour ledit compartiment pour aliments,
- recevoir une valeur de température réelle dudit évaporateur dans ledit compartiment pour aliments du réfrigérateur,
- activer ledit compresseur (6) lorsque la température réelle dépasse un seuil de température haute (T_{marche}) et arrêter ledit compresseur (6) lorsque ladite température réelle chute en dessous d'un seuil de température basse (T_{arrêt}), au moins l'un desdits seuils de température étant généré suivant ladite température cible du compartiment pour aliments,
- mesurer une vitesse de montée de la température de l'évaporateur lorsque ledit compresseur (6) est arrêté et compenser une dépendance de la température moyenne dans ledit compartiment pour aliments vis-à-vis d'une température ambiante en ajustant ledit seuil de température basse et/ou ledit seuil de température haute,
**caractérisé par**
- l'évaluation d'un rapport de dispersion thermique sur la base d'un rapport de ladite vitesse de montée de la température de l'évaporateur lorsque ledit compresseur (6) est arrêté sur une vitesse de chute de la température lorsque ledit compresseur (6) est en marche, et l'ajustement dudit seuil de température basse (T_{arrêt}) et/ou dudit seuil de température haute (T_{marche}) selon ledit rapport de dispersion thermique.
